# EUROPEAN PATENT APPLICATION

(11) **EP 4 550 476 A1**
(43) Date of publication of application: **07.05.2025**
(21) Application number: 24203006.2
(22) Date of filing: 26.09.2024
(51) Int. Cl.: H01M 4/587, H01M 10/0525, H01M 10/0585, H01M 4/02

(54) **ELECTRODE ASSEMBLY AND RECHARGEABLE BATTERY INCLUDING THE SAME**

(30) Priority: 30.10.2023 KR 20230147199
(71) Applicant: SAMSUNG SDI CO., LTD., Giheung-gu Yongin-si, Gyeonggi-do 17084 (KR)
(72) Inventor: Eom, Hyeri, 17084 Yongin-si, Gyeonggi-do (KR); Lee, Junkyu, 17084 Yongin-si, Gyeonggi-do (KR); Yoo, Hana, 17084 Yongin-si, Gyeonggi-do (KR); Lee, Donghun, 17084 Yongin-si, Gyeonggi-do (KR); Do, Uisong, 17084 Yongin-si, Gyeonggi-do (KR); Chae, Wonghyung, 17084 Yongin-si, Gyeonggi-do (KR); In, Jinhyuk, 17084 Yongin-si, Gyeonggi-do (KR)
(74) Representative: Michalski Hüttermann & Partner Patentanwälte mbB

(57) **Abstract**

An electrode assembly includes: an oriented negative electrode, a non-oriented negative electrode a positive electrode between the oriented negative electrode and the non-oriented negative electrode; and a separator between the positive electrode and the oriented negative electrode and between the positive electrode and non-oriented negative electrode, wherein the oriented negative electrode includes a first negative electrode active material including particles oriented in one direction and wherein the non-oriented negative electrode includes a second negative electrode active material including particles randomly oriented in one or more directions.

## Description

### BACKGROUND

### 1. Field

Embodiments of the present disclosure relate to an electrode assembly. For example, embodiments of the present disclosure relate to an electrode assembly for a rechargeable battery, and a rechargeable battery including the same.

### 2. Description of the Related Art

Due to the utilization of organic electrolyte solutions, lithium rechargeable batteries, which have recently been in the spotlight as a power source for portable small electronic devices, exhibit a discharge voltage of up to more than twice as high as comparable batteries utilizing existing alkali aqueous solutions, resulting in relatively high energy density.

A rechargeable battery may include an electrode assembly in which a negative electrode, a separator, and a positive electrode are repeatedly stacked or wound, and the negative electrode and positive electrode include (e.g., each include) a substrate and an active material layer formed on the substrate.

The volume of the electrode assembly may expand due to swelling during charging and discharging, the volume expansion may cause cracks. The cracks may occur in any region of the electrode assembly and deteriorate the electrical characteristics of the rechargeable battery.

### SUMMARY

Therefore, aspects of one or more embodiments of the present disclosure relate to an electrode assembly in which electrical characteristics do not decrease (or in which the decrease is reduced) even though swelling occurs during charging and discharging of the secondary battery, and a rechargeable battery including the same.

An electrode assembly according to one or more embodiments of the present disclosure includes: an oriented negative electrode, a non-oriented negative electrode a positive electrode between the oriented negative electrode and the non-oriented negative electrode; and a separator between the positive electrode and the oriented negative electrode and between the positive electrode and non-oriented negative electrode, wherein the oriented negative electrode includes a first negative electrode active material including particles oriented in one direction and wherein the non-oriented negative electrode includes a second negative electrode active material including particles randomly oriented in various (e.g., one or more) directions.

In one or more embodiments, the oriented negative electrode may include a substrate and the first negative electrode active material on the substrate, and the particles of the first negative electrode active material may be oriented at an angle transverse (*e.g.*, generally or substantially vertical or at a slant or right angle) to a side of the substrate.

In one or more embodiments, the angle may be about 5 degrees to about 90 degrees.

In one or more embodiments, an X-ray diffraction (XRD) (002/110) (e.g., the intensity ratio of the (002/110) peaks of the XRD) of the oriented negative electrode is less than or equal 200, and an XRD (002/110) (*e.g*., the intensity ratio of the (002/110) peaks of the XRD) of the non-oriented negative electrode exceeds (*e.g.*, is greater than) 200.

In one or more embodiments, the oriented negative electrode, the non-oriented negative electrode, and the positive electrode may be alternately repeatedly stacked.

In one or more embodiments, the orientation electrode may be configured to expand in a direction that extends along (*e.g.*, is parallel to) one side of the substrate, and the non-oriented electrode may be configured to expand in a transverse direction (*e.g.*, a generally or substantially vertical direction) with respect to one side of the substrate.

As in one or more embodiments, if (*e.g.*, when) an oriented negative electrode and an unoriented negative electrode are formed and an electrode assembly is formed including the oriented negative electrode and the unoriented negative electrode, expansion can be induced uniformly (substantially uniformly) throughout the electrode assembly even though swelling occurs.

Therefore, the stress due to expansion may not be concentrated in a specific part, and the stress can be dispersed throughout the electrode assembly, thereby minimizing or reducing the occurrence of cracks.

### BRIEF DES CRIPTION OF THE DRAWINGS

FIG. 1 is a schematic, exploded perspective view of a dissembled electrode assembly according to one or more embodiments of the present disclosure.
FIG. 2 is a schematic cross-sectional view of the electrode assembly of FIG. 1, according to one or more embodiments of the present disclosure.
FIG. 3 is a schematic cross-sectional view of the oriented negative electrode according to one or more embodiments of the present disclosure.
FIG. 4 is a schematic plan view of the non-oriented negative electrode according to one or more embodiments of the present disclosure.
FIG. 5 is a schematic cross-sectional view of the non-oriented negative electrode according to one or more embodiments of the present disclosure.
FIG. 6 and FIG. 7 are each a schematic cross-sectional view provided for description of the operation of the negative electrode according to one or more embodiments of the present disclosure.
FIG. 8 is a graph that shows an average of the actual cell thickness in an Embodiment and Comparative Examples.
FIG. 9 is a schematic cross-sectional view illustrating an electrode assembly according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, embodiments of the present disclosure will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

In the drawings, because the size and thickness of each component shown may be exaggerated for better understanding and ease of description, the present disclosure is not necessarily limited to the illustrated drawings. For example, the thickness of layers, films, panels, regions, and/or the like., may be exaggerated for clarity.

Unless otherwise noted, like reference numerals denote like elements throughout the attached drawings and the written description, and thus, duplicative descriptions thereof may not be provided.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element, such as a layer, film, region or substrate, is referred to as being "on" or "connected to" another element, it can be directly on or connected to the other element, or one or more intervening elements may be present. In addition, it will also be understood that when an element is referred to as being "between" two elements, it can be the only element between the two elements, or one or more intervening elements may also be present.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the singular forms "a," "an" and "the" are intended to include the plural forms as well, unless the context clearly indicates otherwise.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

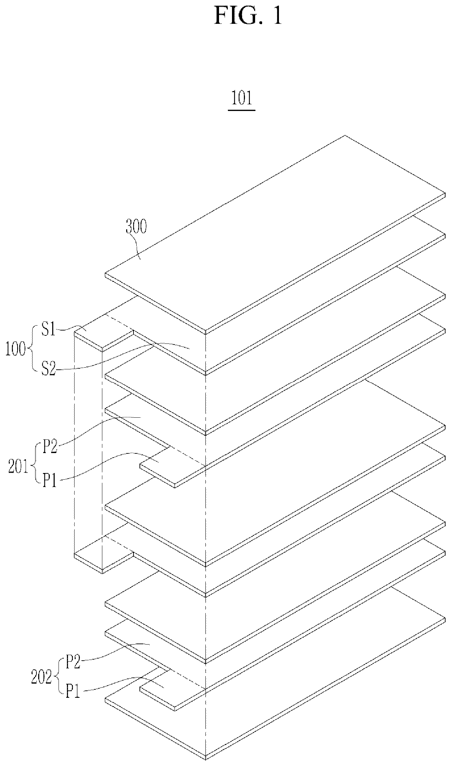

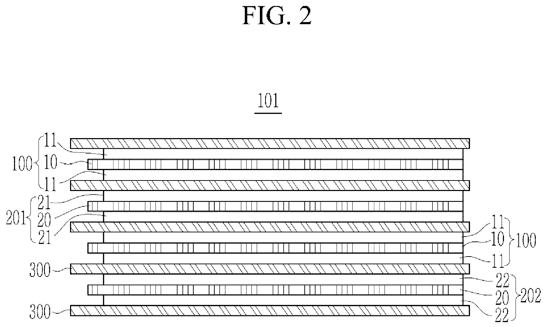

FIG. 1 is a schematic exploded perspective view of a dissembled electrode assembly according to one or more embodiments of the present disclosure, and FIG. 2 is a schematic cross-sectional view of the electrode assembly of FIG. 1, according to one or more embodiments of the present disclosure.

As shown in FIG. 1 and FIG. 2, an electrode assembly 101 according to one or more embodiments includes a positive electrode 100, negative electrodes 201 and 202, and a separator 300, which are each formed in the form of a sheet, and the positive electrode 100 and the negative electrodes 201 and 202 are arranged on both sides (e.g., opposite sides) with the separator 300 in between, and they are repeatedly arranged as such, thereby forming (or providing) a stacked electrode assembly.

The positive electrode 100 includes a first electrode uncoated region S1 in which a substrate 10 is exposed by not applying an active material to the substrate 10 that is an aluminum metal thin plate, and a first electrode active region S2 in which an active material layer 11 is formed on the substrate 10.

As the active material forming (or providing) the active material layer 11 of the positive electrode 100, a compound (lithiated intercalation compound) capable of reversible intercalation and deintercalation of lithium may be utilized. For example, one or more types (kinds) of composite oxides of metal of (e.g., selected from among) cobalt, manganese, nickel, and/or any suitable combination thereof and lithium may be utilized. The content (*e.g.*, amount) of positive active material may be 90 wt% to 98 wt% with respect to the entire weight of the positive active material layer.

The active material layer 11 of the positive electrode 100 may further include a binder and a conductive material. In one or more embodiments, the content (*e.g.*, amount) of the binder and the conductive material may be 1 wt% to 5 wt%, respectively, with respect to the entire weight of the positive active material layer.

The binder serves to adhere the positive active material particles to each other and also to adhere the positive active material to a substrate, which is a current collector. As a representative example of the binder, polyvinyl alcohol, carboxyl methyl cellulose, hydroxypropyl cellulose, diacetyl cellulose, polyvinylchloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene butadiene rubber, acrylate styrene butadiene rubber, epoxy resin, nylon, and/or the like may be utilized, but the present disclosure is not limited thereto. The conductive materials are utilized to provide conductivity to electrodes. In the battery being constructed, any electron conductive material that does not cause chemical changes may be utilized.

The negative electrodes 201 and 202 include metal thin plates with excellent or suitable conductivity. For example, the negative electrodes 201 and 202 may include a second electrode uncoated region P1 where the active material is not applied to a substrate 20 and that may be formed of copper (Cu), and may include a second electrode active portion P2 where the active material layers 21 and 22 are formed in the substrate 20.

The negative active material included in the active material layers 21 and 22 of the negative electrodes 201 and 202 may be a carbon-based active material.

The carbon-based negative active material may be artificial graphite and/or any suitable mixture of artificial graphite and natural graphite. When the carbon-based negative active material, which is artificial graphite and/or any suitable mixture of artificial graphite and natural graphite is utilized as the negative active material, the crystallographic characteristics of particles may be more developed compared to embodiments utilizing amorphous carbon-based active material, and thus there may be merit in further improving the orientation characteristics of the carbon material within the electrode plate with respect to an external magnetic field. The form of the artificial graphite or natural graphite may have any suitable shape such as amorphous, plate-shaped (in the form of plates), flake-shaped (in the form of flakes), spherical shapes, fiber-shaped (in the form of fibers), and/or any suitable combination thereof. In one or more embodiments, if (*e.g.*, when) utilizing a mixture of the artificial graphite and natural graphite, a mixing ratio may be 70:30 to 95:5 weight ratio.

In one or more embodiments, the negative active material layer may further include at least one of an Si-based negative active material, an Sn-based negative active material, and/or a LiMOx (M = metal)-based negative active material. When the negative active material layer further includes these, that is, if (*e.g.*, when) the negative active material layer includes the carbon-based negative active material as a first negative active material and the negative active material as a second negative active material, a mixing ratio of the first negative active material and the second negative active material may be 50:50 to 99:1 weight ratio.

The LiMOx (M = metal)-based negative active material may be a lithium vanadium oxide.

The Si-based negative active material may be Si, an Si-C composite, SiOₓ (0 < x < 2), an Si-Q alloy (where Q is an element of (*e.g.*, selected from among) a group including (*e.g.*, consisting of) alkali metal, alkaline-earth metal, Group 13 elements, Group 14 elements, Group 15 elements, Group 16 elements of the Periodic Table of Elements, a transition metal, a rare earth element, and/or any suitable combination thereof, but not Si) and the Sn-based negative active material may be Sn, SnO₂, an Sn-R alloy (where R is an element of (*e.g.*, selected from among) a group including (*e.g.*, consisting of) alkali metal, alkaline-earth metal, Group 13 elements, Group 14 elements, Group 15 elements, Group 16 elements, a transition metal, a rare earth element, and/or any suitable combination thereof, but not Sn), and the Si-based negative active material may be utilized by mixing one of the above-stated elements and SiO₂. Any one of (*e.g.*, selected from among) a group including (*e.g.*, consisting of) Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or any suitable combination thereof may be utilized as the elements Q and R.

The content (*e.g.*, amount) of the negative active material in the negative active material layer 21 may be 95 wt% to 99 wt% with respect to the entire weight of negative active material layer 21.

The negative active material includes a binder and may further include a conductive material. The content (*e.g.*, amount) of the binder in the negative active material may be 1 wt% to 5 wt% based on the entire weight of the negative active material. In one or more embodiments, if (*e.g.*, when) an additional conductive material is included, the negative active material may be utilized at 90 wt% to 98 wt%, the binder may be utilized at 1 wt% to 5 wt%, and the conductive material may be utilized at 1 wt% to 5 wt%.

The binder serves to adhere the negative active material particles to each other and also to adhere the negative active material to the negative electrode substrate. As the binder, a non-aqueous binder, an aqueous binder, and/or any suitable combination thereof may be utilized.

As the non-aqueous binder, polyvinylchloride, carboxylated polyvinylchloride, polyvinyl fluoride, a polymer containing an ethylene oxide, polyvinylpyrrolidone, polyurethane, polytetrafluoroethylene, polyvinylidene fluoride, polyethylene, polypropylene, polyamideimide, polyimide, and/or any suitable combination thereof may be utilized.

As the aqueous binder, styrene-butadiene rubber, acrylated styrene-butadiene rubber (SBR), acrylonitrile-butadiene rubber, acryl rubber, butyl rubber, ethylene propylene copolymer, poluepichlorohydrine, polyphosphazene, polyacrylonitrile, polystyrene, ethylene propylenediene copolymer, polyvinyl pyridine, chlorosulfonated polyethylene, latex, polyester resin, acryl resin, phenol resin, epoxy resin, polyvinyl alcohol, acrylate-based resin, and/or any suitable combination thereof may be utilized.

When the aqueous binder is utilized as the negative electrode binder, a cellulose-based compound that provides viscosity may be further included as a thickener. As the cellulose-based compound, one or more types (kinds) of carboxyl methyl cellulose, hydroxypropyl methyl cellulose, methyl cellulose, or alkali metal salts thereof may be utilized. Na, K, or Li may be utilized as the alkali metal. The amount of such a thickener that is utilized may be 0.1 parts by weight to 3 parts by weight with respect to 100 parts by weight of the negative active material.

The conductive material is utilized to provide conductivity to the electrode, and in the battery being constructed, any suitable electron conductive material (e.g., conductor) can be utilized as long as it does not cause chemical changes. As an example of the conductive material, a carbon-based material such as natural graphite, artificial graphite, carbon black, acetylene black, Ketjenblack, carbon fiber, and/or the like; a metal-based material such as copper, nickel, aluminum, silver, and/or the like; a conductive polymer such as a polyphenylene derivative and/or the like; and/or any suitable mixture thereof may be utilized.

A Brunauer-Emmett-Teller (BET) specific surface area of the negative active material layer may be less than 3.0 m²/g and may also be 0.6 m²/g to 1.2 m²/g. When the BET specific surface area of the negative active material layer is less than 3.0 m²/g, the electrochemical lifespan characteristics of the cell may be improved.

The BET measurement is performed by charging and discharging the lithium rechargeable battery containing the negative electrode, and then cutting a negative electrode obtained by dismantling a battery in a full-discharge state into a certain size and putting it in a BET sample holder, and utilizing the nitrogen gas adsorption method.

The negative electrode may have a cross-section loading level (L/L) of 6 mg/cm² to 65 mg/cm².

In one or more embodiments, the negative electrodes 201 and 202 may include an oriented negative electrode 201 and a non-oriented negative electrode 202.

The negative active material layers 21 and 22 of the oriented negative electrode 201 and the non-oriented negative electrode 202 are formed of the same negative active material, and active material particles that form (or provide) the active material layer 21 of the oriented negative electrode 201 are oriented, and active material particles forming (or providing) the active material layer 22 of the non-oriented negative electrode 202 are in an unoriented state.

The negative active material particles of the oriented negative electrode 201 may be oriented to have a certain direction through a suitable orientation process utilizing, *e.g.*, a magnet, and/or the like. The orientation process is to align the active material particles in one direction by applying, *e.g.*, a magnetic field with a magnet to the negative active material layer, and the degree of orientation may be controlled or selected by adjusting the strength of the magnetic field, the exposure time of the magnetic field, and the viscosity of the negative active material composition.

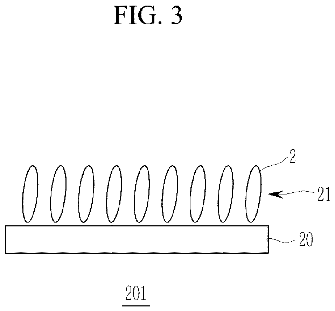

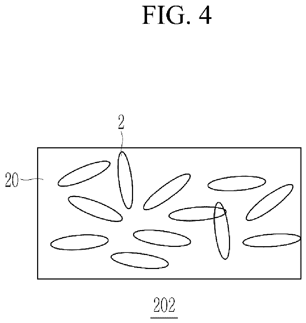

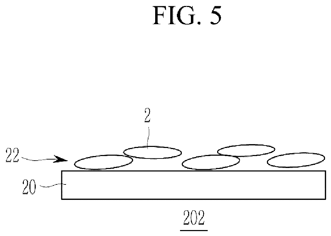

FIG. 3 is a schematic cross-sectional view of the oriented negative electrode 201 according to one or more embodiments of the present disclosure, FIG. 4 is a schematic top plan view of the non-oriented negative electrode 202 according to one or more embodiments of the present disclosure, and FIG. 5 is a schematic cross-sectional view of the non-oriented negative electrode 202 according to one or more embodiments of the present disclosure.

As shown in FIG. 3, oriented active material particles 2 may be erected at a certain angle with respect to the substrate 20, that is, erected in a transverse direction (*e.g.*, a generally or substantially vertical direction) with respect to the substrate 20.

For better understanding and ease of description, in the drawing, a carbon-based active material, for example, including graphite particles each having a long length in one direction, is shown as the negative active material particles.

As shown in FIG. 4 and FIG. 5, the non-oriented negative electrode 202 does not undergo a separate orientation process after applying the negative active material, and thus the negative active material particles 2 are in a non-oriented state. The negative active material particles 2 in the non-oriented state may be aligned in not just one direction but in various directions indicated by the long axis of the negative active material particles (the central axis of the long part of the active material particles) as shown in FIG. 4, and as shown in FIG. 5, most of the negative active material particles may be placed in a direction that extends along (*e.g.*, is parallel or substantially parallel to) one side (*e.g.*, one surface) of the substrate 20. Some negative active material particles may be erected at a certain angle with respect to one surface of the substrate 20, but their content (*e.g.*, amount) is insignificant and thus are not shown in the drawing.

In more detail, for example, the electrode assembly 101 include the oriented negative electrode 201, the non-oriented negative electrode 202, the positive electrode 100 between the oriented negative electrode 201 and the non-oriented negative electrode 202, and the separator (*e.g.*, a first separator 300) between the positive electrode 100 and the oriented negative electrode 201 and (*e.g.*, a second separator 300) between the positive electrode 100 and non-oriented negative electrode 202. The oriented negative electrode 201 includes a first negative electrode active material (including a first active material layer 21) including or being in the form of particles 2 oriented in one direction, and the non-oriented negative electrode 202 include a second negative electrode active material (including a first active material layer 22) including or being in the form of particles 2 randomly oriented in one or more directions.

Here, the oriented negative electrode 202 includes a substrate 20 and the first negative electrode active material (or layer 22) on the substrate 20, and the particles 2 of the first negative electrode active material (or layer 22) are oriented at an angle transverse to a main side (e.g., top side) of the substrate 20.

The x-ray diffraction (XRD) is a useful analysis method using diffraction, and is mainly used to check the crystal structure and grain size of an object, etc. The x-ray diffraction (XRD) analysis (002/110) of the oriented electrode 201 may have a smaller value than the XRD (002/110) of the non-oriented electrode, and, for example, the XRD (002/110) (*e.g.*, the intensity ratio of the (002/110) peaks of the XRD) of the oriented electrode 201 may have a value less then or equal 200 and the XRD (002/110) (*e.g.*, the intensity ratio of the (002/110) peaks of the XRD) of the non-oriented electrode may have a value exceeding 200.

Referring back to FIG. 1 and FIG. 2, the oriented negative electrode 201 and the non-oriented negative electrode 202 may be arranged on opposite sides of the positive electrode 100 within the electrode assembly 101 and they 201, 100, 202 may be alternately and repeatedly stacked.

The separator 300 is a polymer film that passes lithium ion, and may be polyethylene, polypropylene, polyvinylidene fluoride, or a multilayer of two or more layers thereof may be utilized, and/or mixed multilayers such as a polyethylene/polypropylene double-layered separator, a polyethylene/polypropylene/polyethylene triple-layered separator, a polypropylene/polyethylene/polypropylene triple-layered separator, and/or the like may also be utilized.

The separator 300 is formed to be larger in size or area than that of each of the negative electrodes 201 and 202 and the positive electrode 100 and may protrude outward from the negative electrodes 201 and 202 and the positive electrode 100.

The first electrode uncoated region S1 and the second electrode uncoated regions P1 of the repeatedly stacked positive electrode 100 and the negative electrodes 201 and 202 may be electrically connected with additional first electrode or second electrode uncoated regions S1, P1 of the same polarity, respectively, and thus may be electrically connected to outer terminals. The first electrode uncoated region S1 of the positive electrode 100 and the second electrode uncoated regions P2 of the negative electrodes 201 and 202 may be spaced and/or apart (e.g., spaced apart or separated) from each other and may protrude in substantially the same direction, but the present disclosure is not limited thereto and the first electrode uncoated region S1 of the positive electrode 100 and the second electrode uncoated regions P2 of the negative electrodes 201 and 202 may protrude in opposite directions.

The electrode assembly 101 may be accommodated with an electrolyte in a pouch or can-shaped prismatic case and utilized as a rechargeable battery.

The electrolyte may include a non-aqueous organic solvent and a lithium salt. The non-aqueous organic solvent serves as a medium through which ions involved in the electrochemical reaction of a battery may move.

The lithium salt is a material that dissolves in an organic solvent and serves as a supply source of lithium ions within the battery, enabling the basic operation of the lithium secondary battery and promoting the movement of lithium ions between the positive electrode and the negative electrode. As a representative example of the lithium salt, one or two or more of (*e.g.*, selected from among) a group including (*e.g.*, consisting of) LiPF₆, LiBF₄, LiSbF₆, LiAsF₆, LiN (SO₂ C₂F₅)₂, Li (CF₃SO ₂)₂N, LiN(SO₃C₂F₅)₂, LiC₄F₉SO₃, LiClO₄, LiAlO₂, LiAlCl₄, LiN(Cx F₂ₓ₊₁ SO₂) (C yF_{2y+1}SO₂) (where x and y are natural numbers, and for example, an integer of 1 to 20), LiCl, Lil, and/or LiB C₂O₄₂ (lithium bis(oxalato) borate (LiBOB)) may be included.

It is recommended that the concentration of lithium salt be utilized within a range of 0.1M to 2.0M. When the concentration of lithium salt is within the range, the electrolyte has appropriate or suitable conductivity (e.g., of ions) and appropriate or suitable viscosity, and thus it may have excellent or suitable electrolyte performance and lithium ions may move effectively.

As in one or more embodiments of the present disclosure, the stress from contraction and expansion during charge and discharge can be induced to disperse stably and uniformly (substantially uniformly) by alternately stacking the oriented negative electrode 201 and the non-oriented negative electrode 202.

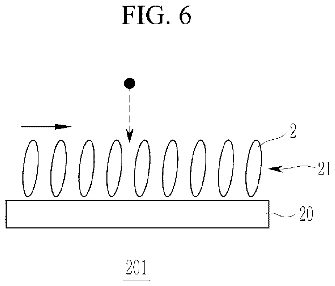

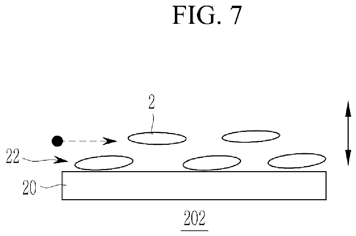

FIG. 6 and FIG. 7 are provided for description of the operation of the negative electrode according to one or more embodiments of the present disclosure.

When the rechargeable battery expands due to charging and discharging, the battery may expand in a direction that is transverse (*e.g.*, generally or substantially perpendicular) to a lithium ion injection direction (as shown, for example, by the dotted line arrow of FIG. 6), and the oriented negative electrode 201 may expand in a direction that extends along (*e.g.*, is parallel or substantially parallel) to a side (*e.g.*, a main or top) side of the substrate 20 (as shown, for example, by the solid line right pointing arrow of FIG. 6) and the non-oriented negative electrode 202 may expand in direction that is transverse (*e.g.*, generally or substantially perpendicular or normal) to the side of the substrate 20 (as shown, for example, by the solid line up and down pointing arrows of FIG. 7).

Here, for example, the oriented negative electrode 201 is configured to expand in a direction parallel the side of the substrate 20, and the non-oriented negative electrode 202 is configured to expand in a transverse or normal direction with respect to the side of the substrate 20 (*e.g.*, expand in thickness direction of the substrate 20).

In one or more embodiments, the oriented negative electrode and the non-oriented negative electrode are alternately arranged and thus the horizontal expansion and the transverse (*e.g.*, generally or substantially vertical) expansion occur alternately within the electrode assembly such that stress can be dispersed rather than being concentrated in any one place in the entire electrode assembly.

Table 1 is a table of measurement of charging and discharging characteristics according to an Embodiment of the present disclosure and Comparative Examples.

| Cell type or kind | Formation process (charge and discharge process) | Cell thickness deviation of position-specific to entire average value | | | | | Room temperature lifespan |
|---|---|---|---|---|---|---|---|
| | Initial efficiency | 1 | 2 | 3 | 4 | 5 | @120cy. |
| Comparative Example 1 | 86.9 % | 1.85 % | -0.81 % | -0.62 % | -1.30 % | 0.88 % | 93.4 % |
| Comparative Example 2 | 87.1 % | -1.08 % | 0.77 % | 0.94 % | 0.61 % | -1.24 % | 94.1 % |
| Embodiment | 87.9 % | 0.48 % | -0.18 % | -0.06 % | 0.04 % | -0.29 % | 94.5 % |

Comparative Example 1 and Comparative Example 2 are electrode assemblies according to the related or comparative art, and Comparative Example 1 is a non-oriented electrode assembly in which an orientation process is not performed on an active material layer and Comparative Example 2 is an oriented electrode assembly in which the orientation process is performed on the entire active material layer, and the Embodiment is an electrode assembly according to one or more embodiments of the present disclosure and includes oriented and non-oriented active materials. Conditions not presented in Table 1 can be understood to be the same between Comparative Examples 1 and 2 and the Embodiment.

The electrode assemblies according to Comparative Examples 1 and 2 and Embodiment are electrode assemblies with 2,100 mAh charge capacity, and measurement was carried out with cycles of CC/CV 0.5C-4.2V, 0.2C cut-off, and 10 minutes rest during charging, and CC 0.5C-2.80V cut-off and 10 minutes rest during discharging.

The Embodiment showed an improvement in initial efficiency of 87.9 % during the chemical process, compared to 86.9 % in Comparative Example 1 and 87.1 % in Comparative Example 2.

In addition, after repeating the charge and discharge cycle 120 times, the Embodiment had an efficiency of 94.5 % and Comparative Examples 1 and 2 had an efficiency of 93.4 % and 94.1 %, respectively, showing that the efficiency after 120 repetitions is higher in the Embodiment.

A cell thickness was measured in five different regions of the electrode assembly. Regions 1 and 5 are both edges of each electrode assembly, and regions 2, 3, and 4 are located in the middle between regions 1 and 5, with reference to the transverse cross-section of the electrode assembly.

When compared to the average value of thickness measured in the plurality of regions, Comparative Example 1 had a thickness deviation of 0.62% to 1.85%, Comparative Example 2 had a thickness deviation of 0.61% to 1.24%, while the Embodiment had a thickness deviation of 0.04% to 0.48%. Accordingly, it can be observed that the thickness deviation is relatively and substantially small in the Embodiment.

In addition, it can be observed that the thickness deviation in each region is less in the Embodiment than in Comparative Examples 1 and 2.

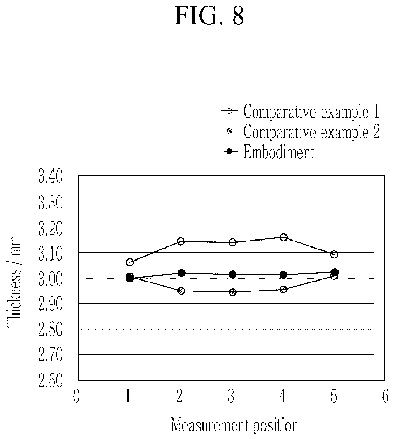

FIG. 8 is a graph that shows the average of the actual cell thickness in the Embodiment and Comparative Examples.

Referring to the graph of FIG. 8, the regions 1, 2, 3, 4, and 5 almost had the same thickness in the Embodiment, but in Comparative Examples 1 and 2, the regions 2, 3, and 4 positioned in the middle were thicker than the regions 1 and 5 positioned at the edges, showing that thickness deviation occurred at the edge and the center.

As described, an electrode assembly with reduced thickness deviation and improved lifespan characteristic can be manufactured by alternately arranging the oriented electrode and the non-oriented electrode as in one or more embodiments of the present disclosure.

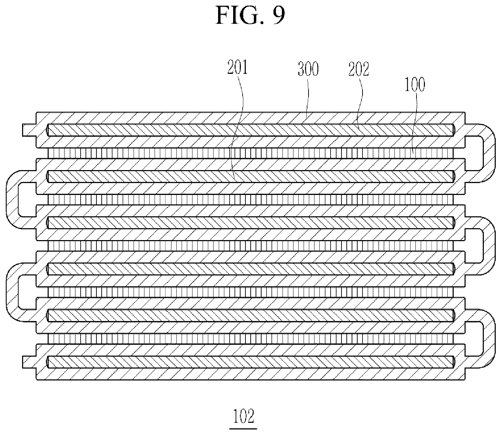

FIG. 9 schematically illustrates an electrode assembly according to one or more embodiments of the present disclosure.

An electrode assembly of FIG. 9 is almost the same as (e.g., is substantially similar to) the electrode assembly of FIG. 1, and therefore only substantial differences will be described in more detail.

In an electrode assembly 102 of FIG. 9, a positive electrode 100 and negative electrodes 201 and 202 are alternatively stacked while disposing a separator 300 therebetween, an oriented negative electrode 201 and a non-oriented negative electrode 202 may be arranged opposite to each other, while disposing the positive electrode 100 therebetween.

As shown in FIG. 9, an accommodation portion in which each of the negative electrodes 201 and 202 are inserted and around (*e.g.*, surrounding) the entire negative electrodes 201 and 202 including edges may be formed by the separator 300, and the accommodation portion is larger than the volume of the negative electrodes 201 and 202 such that the negative electrodes 201 and 202 can be easily accommodated therein. The separator 300 may be formed as substantially continuous one or may have a repeatedly folded shape.

Therefore, the positive electrode 100 may be arranged between one accommodation portion and another accommodation portion of the separator 300.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The portable device, vehicle, and/or the battery, e.g., a battery controller, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

### Reference Numerals

10, 20: substrate
100: positive electrode
101, 102: electrode assembly
201, 202: negative electrode

## Claims

1. An electrode assembly (101) comprising:
an oriented negative electrode (201);
a non-oriented negative electrode (202),
a positive electrode between the oriented negative electrode (201) and the non-oriented negative electrode (202); and
a separator between the positive electrode and the oriented negative electrode (201) and between the positive electrode and non-oriented negative electrode (202),
wherein the oriented negative electrode (201) comprises a first negative electrode active material comprising particles oriented in one direction, and
wherein the non-oriented negative electrode (202) comprises a second negative electrode active material comprising particles randomly oriented in one or more directions.

2. The electrode assembly (101) as claimed in claim 1, wherein:
the oriented negative electrode (201) comprises a substrate (10) and the first negative electrode active material on the substrate (10), and
the particles of the first negative electrode active material are oriented at an angle transverse to a side of the substrate (10).

3. The electrode assembly (101) as claimed in claim 2, wherein
the angle is about 5 degrees to about 90 degrees.

4. The electrode assembly (101) as claimed in any of the claims 1 to 3, wherein:
an X-ray diffraction (XRD) (002/110) of the oriented negative electrode (201) is less than or equal 200, and
an XRD (002/110) of the non-oriented negative electrode (202) is greater than 200.

5. The electrode assembly (101) as claimed in any of the claims 1 to 4, wherein:
the oriented negative electrode (201) is configured to expand in a direction parallel to the side of the substrate (10), and
the non-oriented negative electrode (202) is configured to expand in a transverse direction with respect to the side of the substrate (20).

6. The electrode assembly (101) as claimed in any of the claims 1 to 5, wherein the oriented negative electrode (201), the non-oriented negative electrode (202), and the positive electrode are alternately repeatedly stacked.

7. A rechargeable battery comprising:
the electrode assembly (101) as claimed in any of the claims 1 to 6;
a case accommodating the electrode assembly (101); and
an electrolyte solution in the case together with the electrode assembly (101).

8. The electrode assembly (101) as claimed in any of the claims 1 to 7, wherein:
the oriented negative electrode (201) comprises a substrate (10) and the first negative electrode active material is on the substrate (10), and
the particles of the first negative active material are oriented at an angle substantially perpendicular to a side of the substrate (10).
